(19) Europäisches Patentamt
European Patent Office
Office européen des brevets

(11) **EP 2 574 557 A2**

(12) **EUROPEAN PATENT APPLICATION**

(43) Date of publication:
**03.04.2013 Bulletin 2013/14**

(51) Int Cl.:
**B64G 1/10** (2006.01)  **B64G 4/00** (2006.01)

(21) Application number: **12186418.5**

(22) Date of filing: **27.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2011 US 201113250409**

(71) Applicant: **Raytheon BBN Technologies Corp. Cambridge, MA 02138 (US)**

(72) Inventor: **Kofford, Aaron Oakton, VA Virginia 22124 (US)**

(74) Representative: **Carroll, Christopher P. et al Ropes & Gray International LLP 5 New Street Square London EC4A 3BF (GB)**

(54) **System and method for creating an artificial atmosphere for the removal of space debris**

(57) Systems and methods are disclosed herein for producing an artificial atmosphere for creating drag on space debris. The artificial atmosphere is produced by an artificial atmosphere delivery system (AADS) (400), which comprises a combustible propellant and a propellant ignition device (410). The combustible propellant creates an artificial atmosphere when ignited. The combustible propellant is directed to a region near the path of the space debris by a targeting device. The propellant ignition device (410) ignites the combustible propellant such that ignition of the combustible propellant does not impart significant momentum on the AADS (400). Igniting the combustible propellant creates the artificial atmosphere in the path of the space debris.

400

GNC Subsystem
414

Positioning Subsystem
416

Debris Detector
418

Pressurized Fuel Tank
402

Pressurized Oxidizer Tank
404

406

408

Igniter    410

420

420

Combustion Chamber
412

**Figure 4**

EP 2 574 557 A2

## Description

<u>Field of the Invention</u>

In general, the invention relates to systems and methods for clearing debris or other unwanted objects from a region of space.

<u>Background of the Invention</u>

Accumulation of space debris is a growing problem in many orbital regimes and poses a hazard to space vehicles and satellites. Space debris, also known as "orbital debris," "space junk," or "space waste," includes a collection of objects, such as spent rocket stages, defunct satellites, explosion fragments, and collision fragments, in orbit around Earth that were created by space traffic but no longer serve any useful purpose. This debris poses a potential collision risk for operational space vehicles because the orbits of the debris often overlap with the trajectories of spacecraft. The risk of collision is increased in the low earth orbit (LEO), partly due to the combined effect of high operational traffic in the LEO, and the natural slow gravitational decay process which brings near-orbit debris "home" to the LEO.

Modem spacecraft can be designed to withstand impacts from small space debris less than around 5 mm in diameter. Large debris, greater than about 10 cm in diameter, can be tracked by ground stations which can direct spacecraft so that they avoid collision with large debris. However, medium debris, between around 5 mm and 10 cm in diameter, poses particular risk to spacecraft, as these objects are too small to be tracked by ground stations and are large enough to inflict significant damage to spacecraft.

Scientists have explored a number of techniques to clear debris from space, including natural decay, debris grabbers, space sweepers, and electromagnetic forces. Natural gravitational decay takes a long time to decrease the orbital velocity of debris to the point of re-entry and is ineffective in the face of rapid build-up. Debris grabbers, which typically involve using a tethered grappling unit having robotic arms to envelop and retrieve target debris, require tremendous fuel consumption and also require the development of sensor systems to detect and trace debris. Space sweepers are sacrificial satellites designed to slow or capture debris via collision. They are inefficient due to payload weight and size limitations and a related low probability of collision. Furthermore, there is a risk of creating more debris if space sweepers accidentally collide with larger objects. Devices for exerting electromagnetic forces on debris also run a risk of accidental collision. Furthermore, as it is estimated that less than 10% of debris (by mass) is susceptible to a magnetic field, electromagnetic forces will be ineffective on most space debris.

## Summary

Therefore, there is a need in the art for a method for removing space debris from orbit that is more effective and energy-efficient. One such method is to create an artificial atmosphere in the path of the space debris. The artificial atmosphere produces drag on the space debris, which accelerates orbital decay and reentry of space debris into the atmosphere. As discussed herein, artificial atmospheres can also be used for separating spacecraft from potentially damaging space debris in their paths.

In one configuration, an artificial atmosphere is the combustion product of rocket propellant. Current rocket propellants include solid, liquid, and powdered materials. When fuel and oxidizer are ignited, gas or particulate combustion products are formed. Traditionally, the expulsion of combustion products imparts thrust onto a rocket, allowing a rocket to achieve the velocity needed to deliver a payload to orbit or into space. The systems disclosed herein, on the other hand, allow the ejection or creation of an artificial atmosphere without imparting significant momentum onto the delivery system. The use of propellants for producing an artificial atmosphere have several benefits over previous techniques for clearing space debris, including the simplicity of artificial atmosphere delivery systems and the efficiency of such systems in producing a large volume of gas or particles from dense materials. The techniques disclosed herein also minimize the risk of accidental collision with spacecraft.

Accordingly, systems and methods are disclosed herein for producing an artificial atmosphere for creating drag on space debris. The artificial atmosphere is produced by an artificial atmosphere delivery system (AADS), which comprises a combustible propellant and a propellant ignition device. The combustible propellant creates an artificial atmosphere when ignited. The combustible propellant is directed to a region near the path of the space debris by a targeting device. The propellant ignition device ignites the combustible propellant such that ignition of the combustible propellant does not impart significant momentum on the AADS. Igniting the combustible propellant creates the artificial atmosphere in the path of the space debris.

In one configuration, the combustible propellant is a solid propellant. In this configuration, the propellant ignition device may be a laser. In another configuration, the propellant comprises a liquid fuel and an oxidizer. In this configuration, the AADS includes a fuel tank for storing the liquid fuel, an oxidizer tank for storing the oxidizer, and a combustion chamber in which the liquid fuel and oxidizer are injected and ignited. In this configuration, the artificial atmosphere may be ejected into the path of the space debris directly from the combustion chamber. Furthermore, the AADS may include multiple artificial atmosphere exits, so that at least a portion of the momentum on the system from ejecting the artificial atmosphere from a first of the artificial atmosphere exits counteracts at least a portion of the momentum on the system from ejecting the artificial atmosphere from a second of the artificial atmosphere exits.

In one configuration, the system propels itself into an orbit that is higher than the path of the space debris after the artificial atmosphere has been created. In another configuration, a launch vehicle inserts the AADS into a ballistic trajectory, causing support hardware of the AADS to reenter the Earth's atmosphere. In another configuration, a launch vehicle inserts the AADS into an orbital trajectory. The particle size of the artificial atmosphere, in one configuration, is less than 5 millimeters.

In one configuration, the system also includes a debris detector for identifying space debris and outputting the location of the identified space debris. In one configuration, the AADS is in orbit with a satellite, and AADS is configured for reducing debris around the region of the satellite.

According to another aspect, the invention relates to methods for creating drag on space debris using the artificial atmosphere delivery system (AADS) described above. The method includes identifying a path through which space debris will travel. In one configuration, the drag on the space debris causes the space debris to reenter the Earth's atmosphere. In one configuration, the method further involves determining an amount of drag to impart onto the space debris based on the ballistic coefficient of the space debris.

Brief Description of Drawings

Figure 1A shows a conceptual view of a spacecraft, space debris, and an artificial atmosphere, according to an illustrative configuration of the invention;

Figure 1B shows a conceptual view of orbiting objects travelling through a toroidal artificial atmosphere, according to an illustrative configuration of the invention;

Figure 2 shows a flowchart of a method for producing an artificial atmosphere to create drag on space debris, according to an illustrative configuration of the invention.

Figure 3A shows a conceptual diagram of releasing a solid propellant for creating an artificial atmosphere into the path of space debris, according to an illustrative configuration of the invention.

Figure 3B shows a conceptual diagram of creating an artificial atmosphere into the path of space debris and accelerating reentry of the space debris, according to an illustrative configuration of the invention.

Figure 3C shows a conceptual diagram of a cross-section of solid combustible propellant having multiple layers, according to an illustrative configuration of the invention.

Figure 4 shows a conceptual diagram of an artificial atmosphere delivery system for releasing the combustion product of a liquid propellant to create an artificial atmosphere into the path of space debris, according to an illustrative configuration of the invention.

Figure 5 shows a flowchart of a method for using a liquid propellant to produce an artificial atmosphere to create drag on space debris, according to an illustrative configuration of the invention.

Figure 6 shows a block diagram of a satellite configured for preventing harmful collision with space debris, according to an illustrative configuration of the invention.

Figure 7 shows a flowchart of a method for preventing collision between a satellite and space debris, according to an illustrative configuration of the invention.

Detailed Description

To provide an overall understanding of the invention, certain illustrative configurations will now be described, including systems and methods for producing an artificial atmosphere for creating drag on space debris. However, it will be understood by one of ordinary skill in the art that the systems and methods described herein may be adapted and modified as is appropriate for the application being addressed and that the systems and methods described herein may be employed in other suitable applications, and that such other additions and modifications will not depart from the scope thereof.

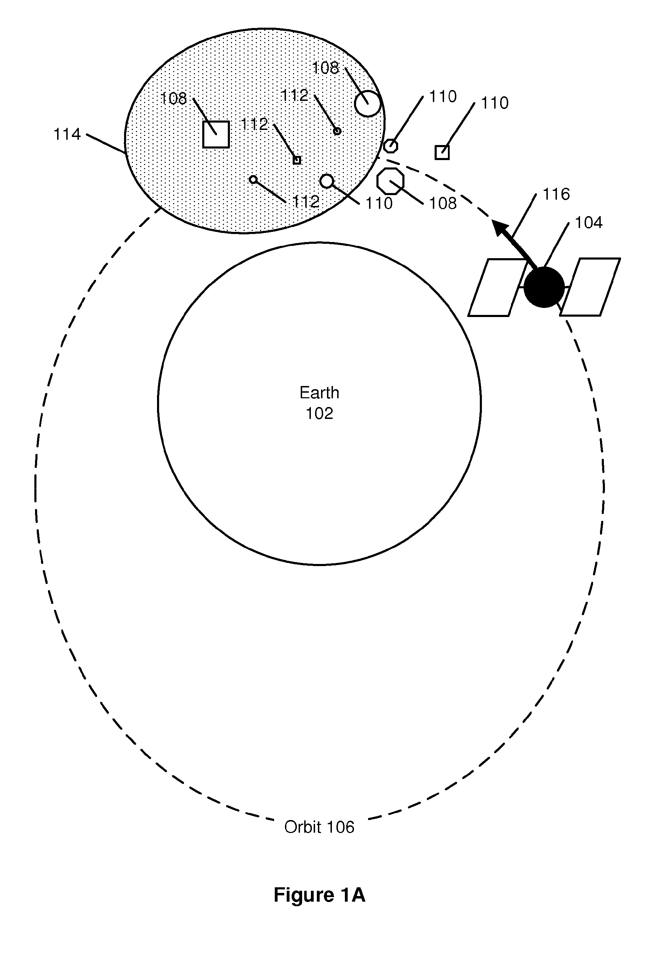

Figure 1A shows a conceptual view of an orbiting spacecraft following a trajectory that will cause it to pass through a cloud of space debris. The spacecraft, shown here as a satellite 104, is following an orbit 106 around the Earth 102. The orbit of the satellite 104 is counter-clockwise, as shown by arrow 116. The satellite 104 is nearing a cloud of space debris comprising space debris 108-112, some of which poses a threat to the satellite 104. The elements of Figure 1A are not to scale. The space debris can include spent rocket stages, defunct satellites, and erosion, explosion, and collision fragments. The space debris in the cloud may be of varying sizes. For example, large space debris 108 has a diameter greater than 10 cm, medium space debris 110 has a diameter between 5 mm and 10 cm, and small space debris 112 has a diameter less than 5 mm. The trajectories of the space debris 108-112 are not shown. The space debris 108-112 may follow orbital trajectories similar to orbital trajectory 106 or different orbital trajectories. Some or all of the space debris 108-112 may not be in orbit at all.

The large space debris 108 can typically be detected from the ground. A ground station can analyze the orbital trajectory of the satellite 104, the trajectory of the space debris 108, and the speeds of the satellite 104 and the space debris 108 to determine whether a particular piece of space debris 108 is on course to collide with the satellite 104. If the space debris 108 will not collide with the satellite 104, no action needs to be taken. If the space debris 108 would collide with the satellite, the ground station sends commands to the attitude and orbital control subsystem of the satellite 104, causing the satellite 104 to reposition itself in orbit to avoid the space debris 108. The satellite 104 may be repositioned after collision has been avoided.

The small space debris 112 likely does not pose a threat to the satellite 104, because many spacecraft are designed to be robust to very small pieces of space debris. If this is the case, the satellite 104 would not experience damage from colliding with the small space debris 112. However, the medium space debris 110 may pose a threat to the satellite 104. The medium space debris 110 is too small to be tracked from a ground station with the accuracy that larger space debris 112 can be tracked, so the ground station cannot send commands for avoiding the medium debris 110 to the satellite 104 as readily as it can send commands for maneuvering around the large debris 108. To protect the satellite 104 from the space debris 108-112, and particularly the medium debris 110, an artificial atmosphere 114 can be created in the region of the space debris 108-112 so that some or all of the space debris 108-112 passes through the artificial atmosphere 114. This will slow down the space debris 108-112 to accelerate its orbital decay, thus lowering the altitude of the space debris or otherwise altering the trajectory of the space debris so that it no longer will collide with the satellite 104.

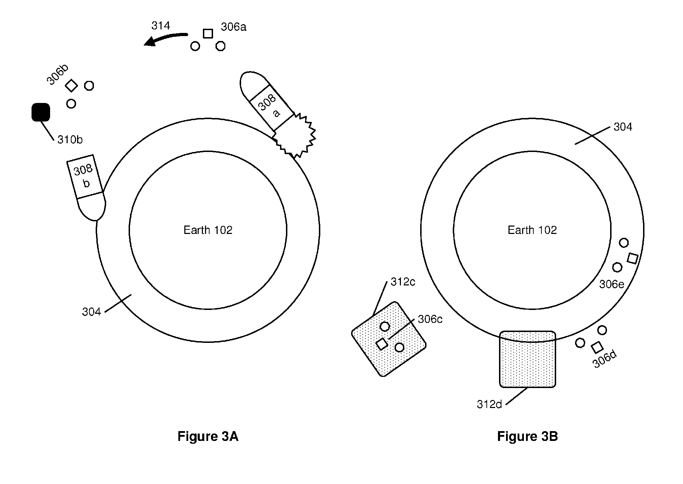

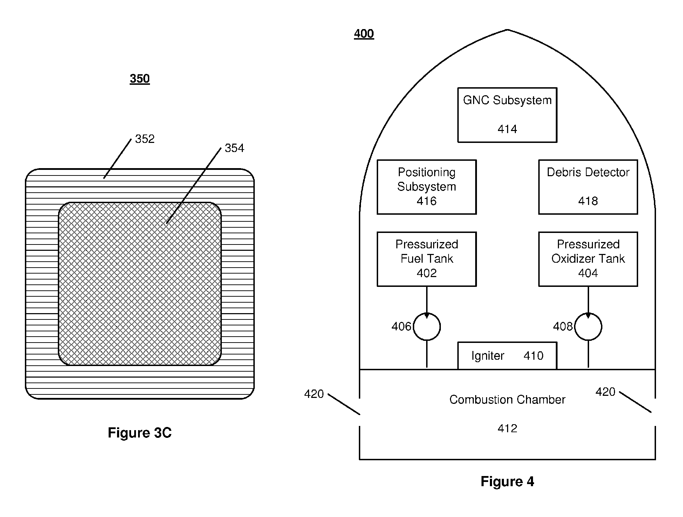

The artificial atmosphere 114 is created by igniting a combustible propellant, such as a liquid, solid, hybrid, particulate, powdered, or gelled propellant, in the region of the space debris 108-112. Particular types of propellants and systems and methods for launching and directing the propellants towards the space debris are described in relation to Figures 3-7. In general, the combustion products are released as a cloud of gas or particles which form the artificial atmosphere 114. The effects that the artificial atmosphere 114 has on the various sizes of space debris 108-112 and the satellite 104 are based on the ballistic coefficient of the object that passes through the atmosphere. In general, smaller objects are more affected by the artificial atmosphere 114 than larger objects. So, if the satellite 104 and a smaller piece of debris are on the same orbit, the space debris would experience greater acceleration of orbital decay than the satellite 104.

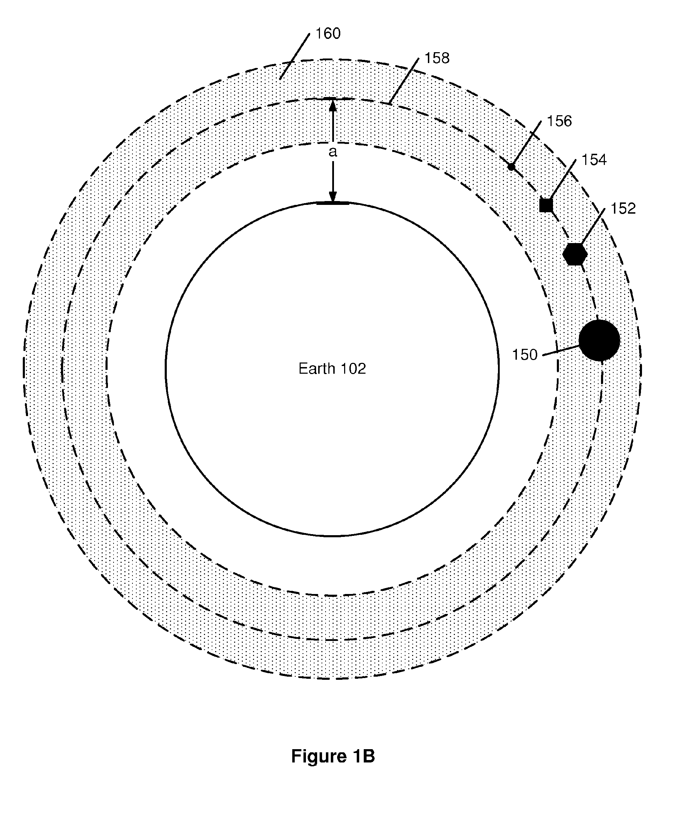

A more detailed example is illustrated in Figure 1B. In this figure, a 2000 kg operational communications satellite (COMSAT) 150, a 200 kg operational mini satellite 152, a piece of large debris 154 that is approximately 10 cm in diameter, and a piece of smaller debris 156 that is about 5 mm in diameter are orbiting the Earth 102. The COMSAT 150, mini satellite 152, large debris 154, and smaller debris 156 are all travelling in a circular orbit 158 with a semi-major axis, labeled a, of 700 km. Figure 1B is not drawn to scale. Estimated ballistic coefficients for the COMSAT 150, mini satellite 152, large debris 154, and smaller debris 156 are 40 kg/m$^2$, 10 kg/m$^2$, 1 kg/m$^2$, and 0.1 kg/m$^2$, respectively. 2,000 kg of propellant is launched (e.g. using a Delta II launch vehicle) to create an artificial atmosphere 160 along the entire circumference of the orbit. It is assumed that the propellant is expanded uniformly about the center of the orbit to create a torus with a diameter of 2 km resulting in an artificial atmosphere 160 with a density of $1.4 \times 10^{-11}$ kg/m$^3$. It is further assumed that the tangential velocity of the artificial atmosphere 160 relative to the Earth's natural atmosphere is exactly zero after expansion. The change in the semi-major axis of the orbit per revolution, $\Delta a_{rev}$, is defined by the following equation:

$$\Delta a_{rev} = \frac{-2\pi \rho a^2}{BC}$$

wherein $\rho$ is the density of the toroidal atmosphere ($1.4 \times 10^{-11}$ kg/m$^3$), $a$ is the semi-major axis (700 km), and BC is the ballistic coefficient. In this scenario, the artificial atmosphere 160 reduces the semi-major axis of the COMSAT 150 by 1 meter, the operational mini satellite 152 by 4 meters per revolution, it reduces the semi-major axis of the large debris 154 by 40 meters per revolution, and it reduces the semi-maj or axis of the smaller debris 156 by 400 meters per revolution. If the dynamics allow for similar reductions over many revolutions, the smaller debris 156 may be removed from orbit in as few as 10 revolutions. On the other hand, the operational COMSAT 150 and the mini satellite 152 will need to recover only 10 and 40 meters of altitude respectively and negligible velocity after 10 revolutions to maintain their orbital positions.

The above example demonstrates that the artificial atmosphere is effective in separating both the large debris and the smaller debris from the operational satellites. In addition, the artificial atmosphere is effective for causing orbiting debris to quickly de-orbit, thus removing the debris from space entirely. Furthermore, since the artificial atmosphere can expand to large volumes (e.g. 2 km diameter toroid), the exact location and trajectory of the debris need not be known.

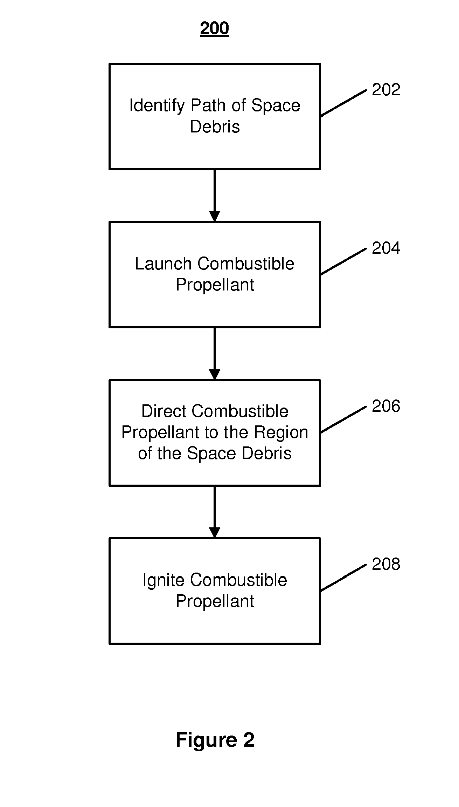

Figure 2 shows a flowchart of a method for producing an artificial atmosphere to create drag on space debris. The method 200 includes the steps of identifying a path of space debris (step 202), launching a combustible propellant (step 204), directing the combustible propellant to the region of the space debris (step 206), and igniting the combustible propellant to create an artificial atmosphere (step 208).

First, one or more pieces of space debris, such as space debris 108-112 shown in Figure 1A, are identified (step 202) by a ground station or a space-based system. In one configuration, the space debris is a known product of a launch or collision that is being tracked. In another configuration, the space debris is identified by a system that scans for debris in the region around one or more spacecraft. If the space debris is determined to be a threat to operational spacecraft, it may be a suitable target for an artificial atmosphere. Even if the space debris does not pose a threat to operational spacecraft, it may be considered for elimination by an artificial atmosphere for other reasons, *e.g.,* if it is on a trajectory to collide with other space debris to create additional space debris, or for general preventative reduction of space debris. In one configuration, a region of space may be targeted without knowledge of space debris in that area. For example, if a spacecraft is travelling through or will travel through a particular region of space, an artificial atmosphere may be deployed to preemptively remove any debris which may be in the region.

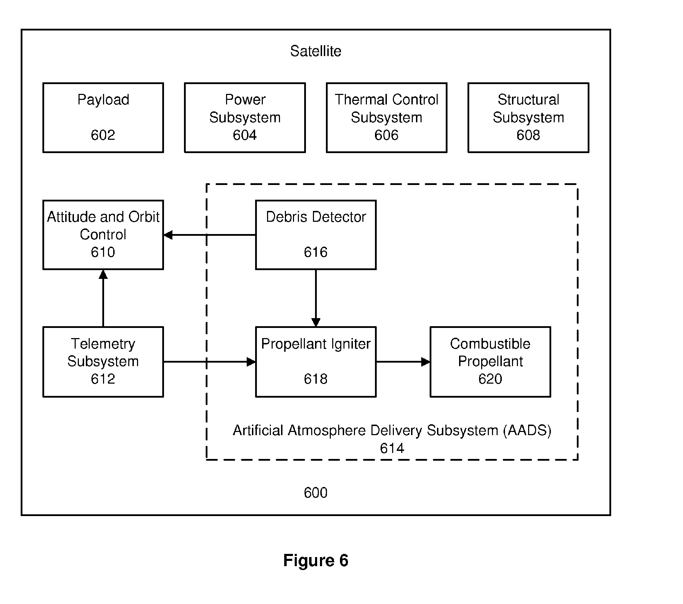

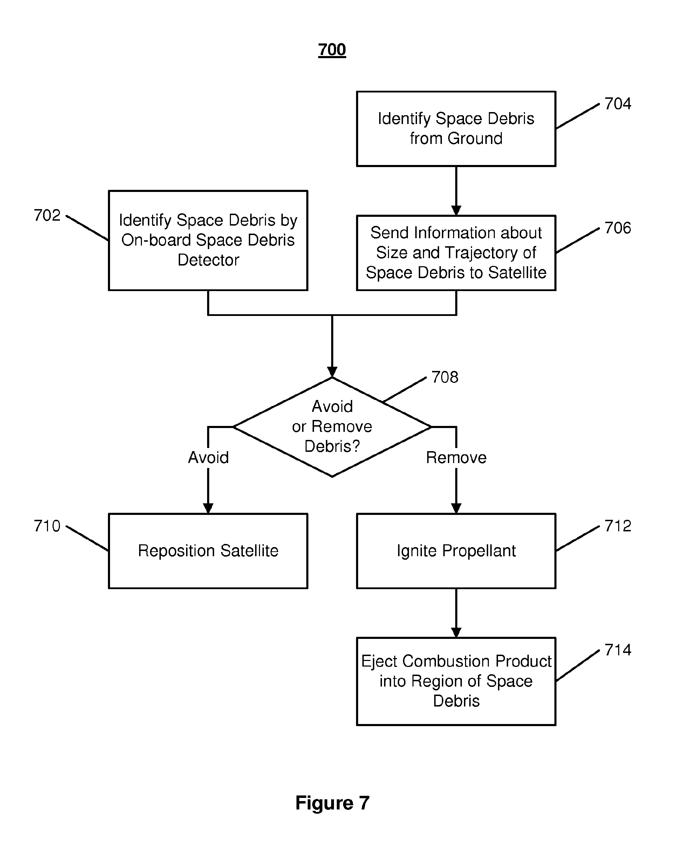

Once the space debris has been targeted, a combustible propellant is launched (step 204). The propellant can be launched by a dedicated launch vehicle or it can use remaining payload capability of a previously planned launch. The combustible propellant is part of an artificial atmosphere delivery system (AADS). The AADS includes the propellant, which consists of fuel and oxidizer, stored as a solid, liquid, powder or gel; a combustion chamber if liquid propellant is used; a propulsion subsystem; a telemetry subsystem; and/or a guidance, navigation, and control (GNC) subsystem. In one configuration, step 204 is carried out before 202. For example, if an AADS is reusable, after an initial use it may be placed in orbit until space debris has been identified for a second use of the AADS. In other configurations described in relation to Figures 6 and 7, the AADS is a subsystem of a spacecraft to be used after the spacecraft has been launched.

Once launched, the combustible propellant is directed to the region of the space debris (step 206). If the combustible propellant is launched by a multi-stage rocket, one of the stages may position the propellant. In one configuration, the combustible propellant is launched to an orbital altitude and directed to the region of the space debris using the propulsion system of the AADS.

Finally, once the combustible propellant is positioned, it is ignited to produce the artificial atmosphere (step 208). The propellant may be ignited by a laser, flame, pyrotechnic, electrical spark, hot wire, or chemical igniter, depending on the type of propellant. If liquid propellants are used, the combination of a hypergolic fuel and oxidizer causes the propellant to ignite without the need for an ignition system. The combustion products, which are directed towards the path of the space debris, create the artificial atmosphere which creates drag on the space debris. Ideally, the artificial atmosphere spreads evenly and uniformly from the propellant source. The artificial atmosphere may stay in orbit for a period of time, reenter the atmosphere and de-orbit, or dissipate.

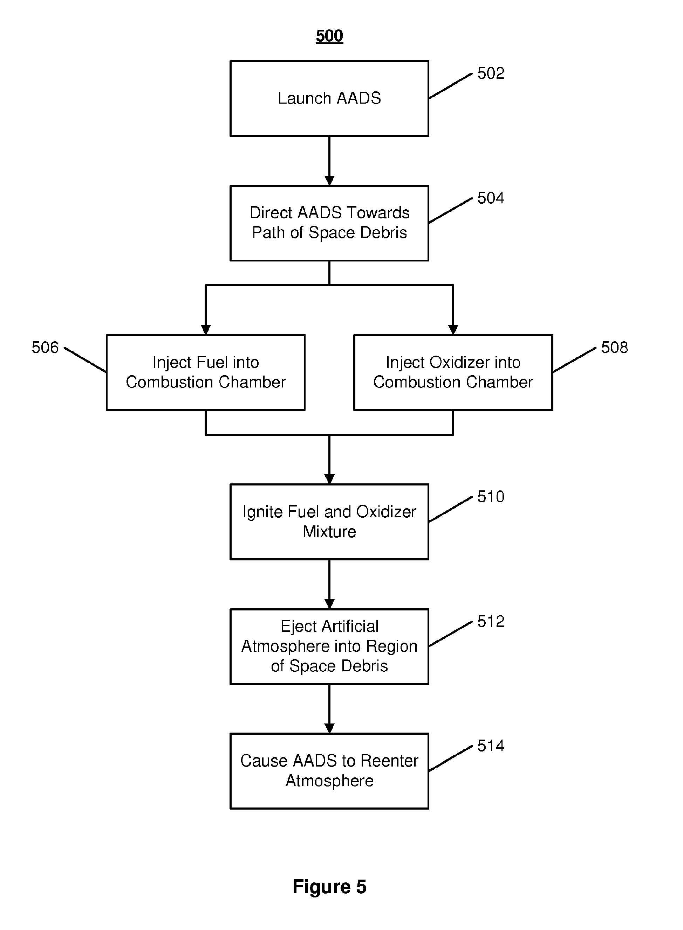

As mentioned previously, there are many different types of systems for producing an artificial atmosphere. Three general classes of artificial atmosphere delivery systems are described below. First, a solid propellant AADS, which requires little or no support hardware after launch, is described in relation to Figures 3A and 3B. Second, a liquid propellant AADS, which uses support hardware, is described in relation to Figures 4 and 5. Third, a spacecraft having an on-board AADS for removing space debris from the area around it is described in relation to Figures 6 and 7.

Figure 3A and 3B illustrate the removal of space debris by creating an artificial atmosphere using solid combustible propellant. The solid propellant may be any solid rocket propellant known in the art. In general, solid propellants consist of a combustible fuel mixed with an oxidizer. For example, the solid propellant may be composed of or include, Hydroxyl-terminated polybutadiene (HTPB), Polybutadiene acrylonitrile (PBAN), ammonium perchlorate composite propellant (APCP), ammonium nitrate composite propellant (ANCP), or China Lake Compound 20 (CL-20, *i.e.,* Hexanitrohexaazaisowurtzitane). The choice of solid propellant can depend on the amount and size of particulate matter created, especially if the combustion product of the solid propellant is not filtered before being released as the artificial atmosphere. CL-20 is particularly promising for use as a solid propellant that is not filtered, as the plume of CL-20 is particle-free. The choice of propellant can also be selected based on material availability, material cost, composition, safety, density, dispersion over time, and/or the ballistic coefficients of the space debris and operational spacecraft in the region. The solid propellant can be encased by another material which may or may not be combustible. The solid propellant may be self-extinguishing, such that energy needs to be continually applied to the propellant to cause it to combust. In this case, only a portion of the solid propellant may be ignited, so that the remainder of the propellant can be used at one or more later times.

Figure 3A shows a conceptual diagram of releasing a solid propellant for creating an artificial atmosphere into the path of space debris. Figure 3A shows the Earth 102 surrounded by the Earth's atmosphere 304 and space debris 306 in orbit above the Earth's atmosphere 304. The space debris 306 is orbiting counterclockwise, as shown by the arrow 314, and the space debris is shown at two different points in time (a and b), the first at the top of Figure 3A (space debris 306a), and the second towards the left (space debris 306b). A solid propellant 310 is launched from the Earth 102 by launch vehicle 308. The launch vehicle 308 releases a block of solid propellant 310 into orbit in the vicinity of the space debris 306. The launch vehicle 308 then reenters the atmosphere 304 at time b. In one configuration, the launch vehicle 308 is composed of multiple stages, which reenter the atmosphere 304 independently. In one configuration, the launch vehicle 308 launches multiple payloads, and the launch vehicle 308 is configured for launching at least a second payload in the same vicinity as the solid propellant 310 or in a different vicinity.

If the launch vehicle 308 can accommodate a precise release of the solid propellant 310, or if the solid propellant 310 can produce a very large artificial atmosphere, the solid propellant 310 can be launched without additional equipment for directing the propellant 310 into the region of the space debris 306. In this case, the solid propellant 310 may be, for example, a cube, rectangular prism, cylinder, or sphere of propellant. The shape of the propellant can be selected based on the desired shape of the artificial atmosphere. In this case, the AADS is simply a mass of solid propellant.

If greater precision is needed than can be achieved by the launch vehicle alone, the AADS also includes a positioning system, such as a guidance, navigation, and control subsystem (GNC) that receives positioning commands from the ground and repositions a payload, i. e., the solid propellant 310, based on the positioning commands. The positioning system propels the solid propellant 310 towards or in front of the space debris 306. In one configuration, the solid propellant 310 is housed in a combustion chamber, which may or may not have a plume filter. The plume filter filters particulate matter so that it does not escape, which would create additional space debris.

The effectiveness of the artificial atmosphere depends on the relative velocity between the artificial atmosphere and the space debris 306. While as shown, the ballistic trajectory of the launch vehicle 308 is in the same clockwise direction as the space debris 306, in one configuration the solid propellant 310 is launched in the opposite direction of the space debris 306 to increase the relative velocity between the artificial atmosphere and the space debris 306, thus increasing the effectiveness of the artificial atmosphere. In different configurations, the artificial atmosphere reaches the space debris 306 from various directions, *e.g.*, in the same direction as the space debris 306 so the space debris 306 catches up to the artificial atmosphere, in the opposite direction of the space debris 306 (i. e., heading toward the space debris 306), or perpendicular to the space debris 306 and traveling from a lower altitude to a higher altitude, from a higher altitude to a lower altitude, or cutting through the orbital trajectory of the space debris 306.

Once the solid propellant 310 is properly positioned, it is ignited and the space debris 306 is slowed and de-orbited, as shown in Figure 3B. Space debris may orbit the Earth several or many times after passing one or more times through the artificial atmosphere before reentering the atmosphere and de-orbiting. The solid propellant 310 may be ignited by an igniter launched with the propellant. If the solid propellant 310 is not launched with support hardware, it may be remotely ignited using a laser on the ground or on another spacecraft. If some of the solid propellant 310 remains after combustion, the laser can ignite remaining propellant so that the remaining propellant does not contribute to space debris. Alternatively, the remaining solid propellant 310 can be ignited at a later time to produce a second artificial atmosphere. In one configuration, the launch vehicle 308 ignites the solid propellant 310 either upon launch using, for example, any of the igniters described above or after launch using a laser. The artificial atmosphere 312 created by igniting the solid propellant 310 is shown in Figure 3B. At time c, the space debris 306 passes through the artificial atmosphere 312 and is slowed by the artificial atmosphere 312. The artificial atmosphere 312 and the space debris 306 both decrease in orbital velocity. At time d, the artificial atmosphere 312 is reentering the Earth's atmosphere 304 and the space debris 306 is nearing the Earth's atmosphere 304. Finally, the space debris 306 reenters the Earth's atmosphere 304 at time e and likely bums up upon reentry.

If the solid propellant 310 is launched with additional support hardware, such as an ignition device, a plume filter, or control or positioning subsystems, these should be removed from orbit so that they do not further contribute to space debris. For this reason, it is preferable in one configuration to launch the solid propellant 310 without support hardware so that there is no risk of contributing further to space debris. However, if support hardware remains, the AADS can include a propulsion system to direct the remaining AADS hardware back towards the atmosphere 304 or into a higher "graveyard" orbit. In one configuration, some or all of the support hardware itself is combustible and ignites with the solid propellant 310. This reduces or eliminates any potential space debris from the AADS.

Although the system disclosed in reference to Figures 3A and 3B was described as using a solid rocket propellant, a different type of propellant, such as a hybrid propellant, a gelled propellant, a powdered propellant, or a particle propellant, can be used instead. If the propellant cannot retain its shape or has risk of separating or falling apart before being combusted, the AADS can include an encasement or support hardware for retaining the propellant until it is combusted.

Figure 3C shows a cross-section of a two-stage solid propellant AADS 350 that can be used in the method described in relation to Figures 3A and 3B. The AADS 350 has two layers of propellant 352 and 354 made of different materials. For example, the outer layer 352 may be a material that requires less energy to ignite than the inner layer 354. This would be particularly useful for an AADS 350 that is ignited remotely or ignited by a low-energy ignition system. Once the outer layer 352 is ignited, if energy from the combustion of the outer layer 352 is higher than the energy needed to ignite the inner layer 354, the combustion of the outer layer 352 causes the inner layer 354 to ignite. On the other hand, if the energy from the combustion of the outer layer 352 is lower than the energy needed to ignite the inner layer 354, the combustion of the outer layer 352 does not ignite the propellant in the inner layer 354. In this case, the AADS 350 can be used a second time by igniting the uncombusted inner layer 354. Additional layers can be added so that the AADS 350 can be used more than twice. In between the combustions, the remaining portion of the AADS 350 can be relocated to a different region of space by a relocating spacecraft or by lasers that apply energy to the AADS 350, with or without igniting it.

In another configuration, the outer layer 352 requires more energy to ignite than the inner layer 354. In this configuration, the high energy requirement for combusting the outer layer 352 helps prevent accidental ignition of the AADS 350, whereas the inner layer 354 may be preferable to the outer layer 354 for producing the majority of the artificial atmosphere due to, for example, relative size of particulate matter produced, relative material availability, relative material cost, composition, relative safety, relative density, relative dispersion over time, and/or the ballistic coefficients of the space debris and operational spacecraft in the region. In still another configuration, multiple layers of the AADS 350 are composed of the same material and separated by layers of different material. In one configuration, layers of the AADS 350 are composed of different classes of material, *e.g.,* the inner layer 354 can be a gelled propellant, while the outer layer 352 can be a solid propellant. Using a solid outer layer helps the AADS 350 retain its shape during production, launch, and positioning.

Figure 4 shows a conceptual diagram of an artificial atmosphere delivery system (AADS) for releasing the product of a liquid propellant to create an artificial atmosphere into the path of space debris. The liquid propellant may be any liquid rocket propellant known in the art. In general, liquid propellants consist of a combustible liquid fuel that is mixed with an oxidizer and ignited. For example, the liquid fuel may be composed of or include liquid hydrogen, kerosene, or methane. The oxidizer may be, for example, liquid oxygen (LOX) or dinitrogen tetroxide ($N_2O_4$). Most liquid propellants produce a gaseous exhaust that would not contribute to space debris and do not need to be filtered. The choice of liquid propellant may depend on material availability, material cost, composition, safety, density, dispersion over time, and/or the ballistic coefficients of the space debris and operational spacecraft in the region. In one configuration, a hybrid, gelled, powdered, or particle propellant is used in AADS 400 rather than a liquid propellant.

The AADS 400 includes a pressurized fuel tank 402 and a pressurized oxidizer tank 404, which are both connected to the combustion chamber 412 by pumps 406 and 408. The pressurized tanks 402 and 404 store the liquid fuel and oxidizer, respectively. Depending on the fuel and/or oxidizer selected, temperature control subsystems can be used to maintain the pressurized tanks at low enough temperatures so that the contents of the tanks stay in their liquid states. When fuel and oxidizer are pumped into the combustion chamber 412, the igniter 410 ignites the mixture to produce the artificial atmosphere. The AADS 400 is configured to produce a single artificial atmosphere or to be reused to produce multiple artificial atmospheres. The size and/or the density of the artificial atmosphere created depend on the amount of fuel pumped into the combustion chamber and ignited. Unlike propulsion systems powered by liquid propellant in which the engine is coupled with a nozzle and shaped specifically to leverage the combustion of the propellant to generate momentum, this system lacks such a nozzle, and the combustion chamber is shaped with one or more exits in one or more directions to minimize or at least reduce the imparting of momentum onto the AADS 400.

In one configuration, the AADS 400 includes subsystems for receiving information about the location of debris and for controlling the position of the AADS 400. Such subsystems include a guidance, navigation, and control (GNC) subsystem 414 for receiving positioning commands from the ground and repositioning the AADS 400. The commands may instruct the AADS 400 to, for example, move towards debris, move away from operational spacecraft to avoid collision, or reenter the Earth's atmosphere. The positioning subsystem 416 carries out the commands from the GNC subsystem 414. The positioning subsystem 416 can utilize the fuel tank 402, oxidizer tank 404, pumps 406 and 408, igniter 410, and combustion chamber 412 for propelling the AADS 400. Alternatively or additionally, the positioning subsystem 416 can include other propulsion means, such as chemical thrusters or resistojet rockets. In addition to or instead of receiving commands from the ground indicating the location of space debris, the AADS 400 can include an onboard debris detector 418 for locating space debris. The debris detector 418 includes detection sensors to locate debris, at least one processor to determine the trajectory of the debris and generate instructions the AADS to create an artificial atmosphere.

Figure 5 shows a flowchart of a method 500 for using the AADS 400 to produce an artificial atmosphere using a liquid propellant to create drag on space debris. The method involves launching the AADS 400, igniting the mixture of fuel and oxidizer, ejecting the artificial atmosphere, and causing the AADS 400 to reenter the Earth's atmosphere.

The AADS 400 is launched into either a ballistic trajectory or an orbital trajectory (step 502). If the AADS 400 is intended for a single use, it is launched into a ballistic trajectory so that it reenters the Earth's atmosphere after the artificial atmosphere is created. If the AADS 400 is intended for multiple uses, it is launched into an orbital trajectory so that after its initial use, it remains in orbit rather than immediately falling back into the Earth's atmosphere. Once launched, the AADS is directed towards the path of the targeted space debris (step 504). As described in relation to Figure 4, the AADS 400 receives commands at the GNC subsystem 414 directing the AADS 400 towards the space debris, locates space debris and determines control commands on-board using the debris detector 418, or uses a combination of ground controls and controls from the debris detector 418. For example, the ground controls may provide initial guidance for directing the AADS towards a region of space debris, and when the AADS 400 nears the space debris, the debris detector 418 gathers more detailed information and is able to provide more precise control commands to the AADS 400.

Once the AADS 400 has been positioned, fuel and oxidizer are injected into the combustion chamber 412 from the fuel tank 402 and the oxidizer tank 404 (steps 506 and 508). The fuel and oxidizer mixture are ignited by the igniter 410 (step 510). The artificial atmosphere is then ejected into the region of the space debris (step 512) in a manner that exerts minimal momentum onto the AADS 400. Unlike rocket systems, the AADS 400 does not propel the exhaust through a nozzle. Thus, the flow of gas produced in the combustion chamber is not passed through a throat for accelerating or choking the flow to increase thrust. The shape of the combustion chamber itself and the shape of the one or more combustion chamber openings are also designed to minimize the momentum on the AADS 400. For example, a single large combustion chamber exit would cause a volume of gas to escape at a lower velocity than a single smaller combustion chamber exit; the larger exit would therefore cause the AADS 400 to experience less momentum than a smaller exit would. However, any unbalanced ejection of exhaust will result in momentum on the AADS 400. So, in one configuration, the AADS 400 is configured for ejecting exhaust in two or more different directions, for example, through openings 420, so that there is no net momentum on the AADS 400 or the net momentum is less than it would be if exhaust were ejected in only one direction.

Finally, after the AADS 400 has created the artificial atmosphere, it reenters the atmosphere (step 514). If the AADS 400 was launched on a ballistic trajectory, it will follow that trajectory back to the Earth's atmosphere. If the AADS 400 had been in orbit to be reused, once it has exhausted its supply of fuel or oxidizer or is to be disabled for other reasons, it is directed to reenter the atmosphere. In one configuration, rather than de-orbiting, the AADS 400 is propelled to a higher "graveyard" orbit.

Figure 6 shows a block diagram of a satellite configured for preventing harmful collision with space debris. Unlike the dedicated systems for space debris removal previously described, the satellite 600 is configured for a mission not related to space debris removal, and also has a space debris removal system on-board for clearing the region around the satellite 600 to prevent collision with nearby space debris. For example, if a piece of space debris is on a trajectory to collide with a satellite 600, the satellite 600 can produce an artificial atmosphere in its region to slow the space debris down, which changes the trajectory of the space debris so that the satellite 600 avoids collision with the space debris. The satellite 600 includes a payload 602, a power subsystem 604, a thermal control subsystem 606, a structural subsystem 608, an attitude and orbital control subsystem 610, a telemetry subsystem 612, and an artificial atmosphere delivery system (AADS) 614. The AADS comprises a debris detector 616, a propellant igniter 618, and combustible propellant 620. The debris detector 616 is similar to the debris detector 418 as described in relation to Figure 4. The combustible propellant 620 can be a liquid, solid, gelled, powdered, or particle propellant. The combustible propellant can alternatively be a hybrid propellant, which includes two propellants in different states of matter, e.g, a liquid oxidizer and a solid fuel, or a solid oxidizer and a liquid fuel. If the combustible propellant 620 is or includes a liquid propellant, the AADS 614 may also include a fuel chamber and/or oxidizer chamber, a combustion chamber, and pumps similar to those shown in Figure 4.

The payload 602 carries out the operational mission of the satellite 600. The payload 602 is supported by various other subsystems such as the power subsystem 604, thermal control subsystem 606, and structural subsystem 608. The power subsystem 604 provides power for the payload 602 and other subsystems. The thermal control subsystem 606 prevents the satellite 600 from experiencing extreme temperatures which may cause temporary dysfunction or permanent damage. The structural subsystem 608 provides the structural support for the subsystems in the satellite 600. The attitude and orbit control subsystem 610 keeps the satellite in the correct orbital position using small rocket thrusters and keeps antennas positioned in the right directions. The telemetry subsystem 612 monitors the on-board equipment operations, transmits operation data to the earth control station, and receives ground station commands to perform operation adjustments.

The aforementioned subsystems are configured for performing their standard functions in a satellite 600 as described above. However, some of them perform additional functions as required by the AADS 612. For example, the telemetry subsystem 612 can receive a command from a ground station to create an artificial atmosphere. The propellant igniter 618 and the debris detector 616 are powered by the power subsystem 604. As discussed with respect to Figure 4, if a liquid propellant is used, it may need to be maintained at a particular temperature; the temperature can be maintained by the thermal control subsystem 606. Furthermore, the debris detector 616 of the AADS 614 can provide information on space debris and/or commands to the attitude and orbit control subsystem 610. The commands cause the attitude and orbit control subsystem 610 to reposition the satellite 600 to avoid space debris. The telemetry subsystem 612 can receive similar commands from a ground station for instructing the attitude and orbit control subsystem 610 to reorient or reposition the satellite 600. The satellite 600 may return to its original orbital position or orientation after passing the space debris.

For orbiting satellites, it is particularly important that the AADS 614 does not impart significant momentum onto the satellite 600. Satellites in low earth orbit are often part of constellations of satellites that provide continuous coverage of geographic areas. Imparting significant momentum on a satellite in low orbit will cause it to move with respect to the constellation, affecting the constellation's coverage. Satellites in geosynchronous orbits are assigned orbital slots by the International Telecommunications Union which regulates the positioning of satellites. Imparting significant momentum from a satellite in geosynchronous orbit may not only cause disruption in or altering of ground coverage, but it may also cause the satellite to drift from its slot. Therefore, in releasing the artificial atmosphere, the momentum created by the ejection of the artificial atmosphere preferably is balanced, such that the net momentum on the satellite is minimal or is otherwise counteracted by, *e.g.*, station keeping thrusters. The AADS can release artificial atmosphere from multiple atmosphere exits such that the net momentum on the satellite 600 is minimized. In one configuration, the satellite 600 can have multiple AADSs, *e.g.*, one AADS on each side of the satellite.

Figure 7 shows a flowchart of a method 700 for preventing collision between the satellite 600 and space debris. The method involves identifying space debris from the ground or from the satellite, determining whether to avoid or remove the space debris, and either repositioning the satellite or creating an artificial atmosphere to remove the space debris from the vicinity of the satellite.

Space debris can be identified by the on-board space debris detector 616 (step 702) as previously described. Detection sensors of the space debris detector 616 collect information related to space debris. A processor distinguishes space debris that poses a risk to the satellite 600 from debris that will not pose a risk based on its size or trajectory. Space debris can additionally or alternatively be identified by a ground station (step 704). Either a ground station processor or a human monitor can determine whether the detected space debris poses a threat to the satellite 600. If the space debris poses a threat, the ground station sends information about the size and trajectory of the space debris to the satellite 600 (step 706). Once the debris has been identified, a processor on the satellite 600 and/or a processor or human monitor at the ground station determines whether the debris should be avoided or removed (decision 708). If the satellite 600 can navigate around the space debris without significant operational impact, it may be preferable to avoid the debris rather than remove it or separate itself from the debris using an artificial atmosphere. The decision to avoid or remove the debris can be based on the artificial atmosphere supply, other equipment or debris in the region of the satellite 600, the operational requirements of the satellite 600, the level of certainty with which a particular approach would work, and/or the size, shape or weight of the space debris, among other factors.

As stated above, the decision to avoid the space debris or eject an artificial atmosphere may be performed at the ground station or on the satellite. If the space debris is identified at a ground station, the ground processor or human monitor can use information about the debris and telemetry data received from the satellite 600 to determine whether to avoid the debris or create an artificial atmosphere. If the debris is detected by the satellite, information about the debris can be sent to the ground station, and the ground processor or human monitor determines whether to avoid or remove the debris. In either case, the ground station then sends the appropriate commands to the satellite 600 to carry out the avoidance of the debris or the ejection of an artificial atmosphere. Alternatively, information about space debris identified by the on-board debris detector 616 or information received from the ground station can be used by a processor on the satellite 600 for deciding whether to avoid or remove the debris and for generating commands to carry out the selected course of action.

If the decision is to avoid the space debris, the satellite 600 is repositioned by the attitude and orbital control subsystem 610 or by another positioning subsystem (step 710). After the space debris no longer poses a threat to the satellite 600, the satellite 600 may reposition itself. Operations may temporarily be suspended if the satellite 600 needs to be repositioned in such a way that it can no longer communicate with the ground. If the decision is to remove the space debris from the region of the satellite 600, the igniter 618 ignites the combustible propellant 620 (step 712) to and ejects the combustion product towards the space debris to produce an artificial atmosphere in the region of the space debris (step 714). As previously described, the drag created by the artificial atmosphere alters the trajectory of the space debris, so that the space debris no longer threatens to collide with the satellite 600. Thus, the space debris is removed from the immediate region of the satellite 600, and may be removed from space if the drag is sufficient to lead to reentry.

A satellite may continue some or all of its space debris detection, avoidance, and removal functions when other subsystems become nonoperational or after the satellite has been retired. While it may no longer be necessary to protect a nonoperational or retired satellite, continued collision prevention prevents the creation of new space debris as a product of a collision. While method 700 was described in relation to satellite 600, a similar method may be used by a non-orbiting spacecraft which may encounter space debris.

While preferable configurations of the present invention have been shown and described herein, it will be obvious to those skilled in the art that such configurations are provided by way of example only. Numerous variations, changes, and substitutions will now occur to those skilled in the art without departing from the invention. It should be understood that various alternatives to the configurations of the invention described herein may be employed in practicing the invention. It is intended that the following claims define the scope of the invention and that methods and structures within the scope of these claims and their equivalents be covered thereby.

## Claims

1. An artificial atmosphere delivery system (AADS) for creating drag on space debris travelling along a path, the AADS comprising:

a combustible propellant, wherein the propellant creates an artificial atmosphere when ignited, and wherein the propellant is directed to a region near the path of the space debris by a targeting device; and
a propellant ignition device for igniting the combustible propellant such that ignition of the combustible propellant does not impart significant momentum on the AADS;
wherein igniting the combustible propellant creates the artificial atmosphere in the path of the space debris.

2. The system of claim 1, wherein the combustible propellant is a solid propellant.

3. The system of claim 1, wherein the propellant ignition device is remote from the combustible propellant.

4. The system of claim 1, the propellant comprising a liquid fuel and an oxidizer, and the AADS further comprising:

a fuel tank for storing the liquid fuel;
an oxidizer tank for storing the oxidizer; and
a combustion chamber in which the liquid fuel and oxidizer are injected and ignited by the propellant ignition device to produce the artificial atmosphere.

5. The system of claim 4, further comprising a plurality of artificial atmosphere exits, such that at least a portion of the momentum imparted on the AADS from ejecting the artificial atmosphere from a first of the artificial atmosphere exits counteracts at least a portion of the momentum imparted on the AADS from ejecting the artificial atmosphere from a second of the artificial atmosphere exits.

6. The system of claim 1, wherein a launch vehicle inserts the AADS into a ballistic trajectory, causing support hardware of the AADS to reenter the Earth's atmosphere.

7. The system of claim 1, further comprising a debris detector for identifying space debris and outputting the location of the identified space debris.

8. A method for creating drag on space debris, the method comprising:

identifying a path through which space debris will travel;
directing, by an artificial atmosphere delivery system (AADS), a combustible propellant that creates an artificial atmosphere when ignited to a region near the path of the space debris; and
igniting the combustible propellant to create an artificial atmosphere in the path of the space debris such that ignition of the combustible propellant does not impart significant momentum on the AADS.

9. The method of claim 8, wherein the combustible propellant is a solid propellant and igniting the combustible propellant comprises:

directing a laser towards the solid propellant; and
igniting the solid propellant with the laser.

10. The method of claim 8, wherein the AADS comprises a fuel tank, an oxidizer tank, and a combustion chamber, and igniting the combustible propellant further comprises:

injecting fuel from the fuel tank for storing the combustible propellant into the combustion chamber;
injecting oxidizer from the oxidizer tank into the combustion chamber;
igniting the mixture of fuel and oxidizer to produce the artificial atmosphere; and
ejecting the artificial atmosphere into the path of the space debris.

11. The method of claim 8, further comprising ejecting the artificial atmosphere from a plurality of artificial atmosphere exits of the AADS such that at least a portion of the momentum imparted on the AADS from ejecting the artificial atmosphere from a first of the artificial atmosphere exits counteracts at least a portion of the momentum imparted on the AADS from ejecting the artificial atmosphere from a second of the artificial atmosphere exits.

12. The method of claim 8, further comprising launching the propellant and the AADS into a ballistic trajectory, causing support hardware of the AADS to reenter the Earth's atmosphere.

13. The method of claim 8, wherein the propellant is launched into an orbital trajectory, and the particle size of the artificial atmosphere is less than 5 millimeters.

14. The method of claim 8, wherein the AADS is in orbit with a satellite, the method further comprising reducing debris around a region of the satellite.

15. The method of claim 8, further comprising determining an amount of drag to impart on the space debris based on a ballistic coefficient of the space debris.

**Figure 1A**

**Figure 1B**

**200**

```
┌─────────────────────────┐
│  Identify Path of Space  │ ─── 202
│         Debris           │
└─────────────────────────┘
             │
             ▼
┌─────────────────────────┐
│   Launch Combustible     │ ─── 204
│        Propellant        │
└─────────────────────────┘
             │
             ▼
┌─────────────────────────┐
│   Direct Combustible     │
│ Propellant to the Region │ ─── 206
│    of the Space Debris   │
└─────────────────────────┘
             │
             ▼
┌─────────────────────────┐
│   Ignite Combustible     │ ─── 208
│        Propellant        │
└─────────────────────────┘
```

**Figure 2**

**Figure 3A**

**Figure 3B**

350

352    354

**Figure 3C**

400

GNC Subsystem

414

| Positioning Subsystem 416 | Debris Detector 418 |

| Pressurized Fuel Tank 402 | Pressurized Oxidizer Tank 404 |

406    408

Igniter    410

420    Combustion Chamber    420

412

**Figure 4**

**500**

```
         ┌──────────────────────┐
         │     Launch AADS      │——— 502
         └──────────────────────┘
                    │
                    ▼
         ┌──────────────────────┐
         │  Direct AADS Towards │——— 504
         │  Path of Space Debris│
         └──────────────────────┘
              │            │
      ┌───────┘            └───────┐
      ▼                            ▼
┌──────────────────┐    ┌──────────────────┐
│  Inject Fuel into│    │ Inject Oxidizer  │
│Combustion Chamber│    │ into Combustion  │
│                  │    │     Chamber      │
└──────────────────┘    └──────────────────┘
  506                                    508
      └───────┐            ┌───────┘
              ▼            ▼
         ┌──────────────────────┐
         │ Ignite Fuel and      │——— 510
         │ Oxidizer Mixture     │
         └──────────────────────┘
                    │
                    ▼
         ┌──────────────────────┐
         │  Eject Artificial    │——— 512
         │  Atmosphere into     │
         │  Region of Space     │
         │      Debris          │
         └──────────────────────┘
                    │
                    ▼
         ┌──────────────────────┐
         │ Cause AADS to Reenter│——— 514
         │     Atmosphere       │
         └──────────────────────┘
```

**Figure 5**

Satellite

| Payload 602 | Power Subsystem 604 | Thermal Control Subsystem 606 | Structural Subsystem 608 |

Attitude and Orbit Control 610

Debris Detector 616

Telemetry Subsystem 612

Propellant Igniter 618

Combustible Propellant 620

Artificial Atmosphere Delivery Subsystem (AADS) 614

600

Figure 6

<u>700</u>

Identify Space Debris
from Ground ⟋ 704

Identify Space Debris by
On-board Space Debris
Detector
702 ⟍

Send Information about
Size and Trajectory of
Space Debris to Satellite ⟋ 706

⟋ 708
Avoid
or Remove
Debris?

Avoid

Remove

Reposition Satellite
710 ⟍

Ignite Propellant ⟋ 712

Eject Combustion Product
into Region of Space
Debris ⟋ 714

**Figure 7**